# EUROPÄISCHE PATENTSCHRIFT

(11) **EP 0 893 053 B1**
(45) Veröffentlichungstag und Bekanntmachung des Hinweises auf die Patenterteilung: **12.03.2003**
(21) Anmeldenummer: 98113453.9
(22) Anmeldetag: 18.07.1998
(51) Int. Cl.: A01F 15/07

(54) **Vorrichtung zum Pressen und Umwickeln von Rundballen**
Apparatus for pressing and wrapping round bales
Presse et appareil pour envelopper des balles rondes

(30) Priorität: 23.07.1997 DE 19731520
(43) Veröffentlichungstag der Anmeldung: 27.01.1999
(60) Teilanmeldung: 02003612.5
(73) Patentinhaber: Usines Claas France, 57140 St. Remy/Woippy (FR)
(72) Erfinder: Biller, Bernd, Dipl.Ing., 42111 Wuppertal (DE)
(74) Vertreter: Klesper, Hanns-Otto

(56) Entgegenhaltungen:
- EP-A- 0 865 723
- DE-A- 4 120 733
- DE-A- 4 208 091

## Beschreibung

Die Erfindung betrifft eine Vorrichtung zum Pressen und Umwickeln von Rundballen aus Heu, Halbheu, Stroh oder ähnlichem Halmgut, bestehend aus einer Ballenpresse und einer Verpackungsvorrichtung, welche beide über zumindest einem sich auf Laufrädern abstützenden Rahmengestell miteinander verbunden sind und einer in Längsrichtung bewegbaren Transportvorrichtung, welche einen fertig gewickelten Rundballen von der Ballenauswurfsöffnung zur Verpackungsvorrichtung transportiert.

Gattungsgemäße Vorrichtungen sind aus der Landwirtschaft bekannt und bestehen in der einfachsten Ausführung aus einer Rundballenpresse, welche an einem vorhandenen Schlepper angehängt wird und zum Aufnehmen von Heu oder Stroh vorgesehen ist. Das Heu oder Stroh wird in der Rundballenpresse unter einem gleichzeitigen Pressvorgang in der Trommel zu einem Rundballen gewickelt, der nach Erreichen einer vorbestimmten Größe durch eine hintere Klappenöffnung ausgeworfen wird und im gewickeltem Zustand auf dem Feld liegen bleibt. Durch die Witterungseinflüße bedingt verrottet das auf diese Weise gepreßte Heu und kann dem späteren Verwendungszweck nicht in dem vorgesehenen Umfang zugeführt werden. Um die Haltbarkeit und Lagerzeit der aufgewickelten Rundballen zu erhöhen werden im Weiteren Wickelvorrichtungen vorgeschlagen, welche teilweise als einzelne anhängbare oder separate Maschinen ausgebildet sind und die aufgewickelten Rundballen vom Feld aufnehmen, umwickeln und anschließend wieder abwerfen. Alternativ hierzu sind an einer Ballenpresse anhängbare Wickelvorrichtungen bekannt, welche die gewickelten Rundballen übernehmen und einwickeln, wobei die bekannten Ausführungen der Verpackungsvorrichtungen eine Reihe von Nachteilen aufweisen.

Eine solche Vorrichtung ist beispielsweise aus der WO-A-90/14756 bekannt, wobei das Rundballenwickelgerät an die Ausstoßöffnung der Rundballenpresse angeschlossen ist. Der Wickeltisch ist nur zum Abladen des mit der Kunststofffolie umwickelten Rundballen nach hinten absenkbar. Für die Beladung des Wickeltisches mit der aus der Ballenpresse ausgestoßenen Rundballen und zu dessen Umwicklung dient ein Ladebügel. Dieser greift in die Stirnfläche des Rundballens ein und hebt diesen auf den Wickeltisch, dabei muß der Schwenkweg so gewählt werden, daß der Ballen über die Kante des Wickeltisches frei bewegt werden kann. Gleichzeitig ist der Abstand zur Haube der Rundballenpresse so zu wählen, daß diese ausgehend vom geöffneten Zustand nach dem Ausstoßen des Rundballens wieder geschlossen werden kann. Nachteilig ist die besonders große Baulänge des Rundballenwickelgerätes, welche zu einer eingeschränkten Manövrierfähigkeit im Gelände und auf der Straße führt. Des Weiteren ist von Nachteil, daß der Rundballen freischwebend über die Tischkante zu heben ist, um Beschädigungen des gepreßten Rundballens zu verhindern. Beim Abwurf hingegen fällt der umwickelte Rundballen auf seine Zylinderfläche und die etwa 5-fach aufliegenden Lagen der Einwickelfolie können ggfs. durch ein Eindringen von Fremdkörpern beschädigt werden, so daß die Dichtheit der Umwicklung nicht mehr gegeben ist. Dadurch, daß das Wickelgerät in Fahrtrichtung starr mit der Rundballenpresse verbunden ist und eine starre Fahrachse aufweist, werden die Laufräder des Wickelgerätes bei Kurvenfahrten des Gerätezuges seitlich stark verschoben, was für die Feld- und Straßenfahrten nicht von Vorteil ist. Ferner ist es nachteilig, daß es sich um ein Spezialgerät handelt, das nicht zur Aufnahme der auf dem Feld abgelegten Rundballen und zum stationären Betrieb geeignet bzw. hierzu ausbaufähig ist, so daß die Akzeptanz für solche Geräte nicht besonders groß ist.

Aus der EP-A-0 391 884 ist im Weiteren eine Vorrichtung zum Umwickeln eines Rundballens bekannt, welche zum Anhängen an die Dreipunktaufhängung eines Schleppers vorgesehen ist. Die Vorrichtung weist einen Ballenladebügel und einen verschwenkbaren Wickeltisch auf, welcher nach hinten, in entgegengesetzter Richtung zur Anordnung des Schleppers verschwenkt werden kann. Die Vorrichtung dient zur Aufnahme von bereits fertig gepreßten Rundballen vom Erdboden durch den Ballenladebügel, wobei nach der Aufnahme und Lagerung des Rundballens auf dem Wickeltisch der Wickelvorgang eingeleitet wird und nach Abschluß des Wickelvorganges ein Abwerfen in der Aufnahmerichtung erfolgt. Die Vorrichtung ist nur im Zusammenhang mit einem Schlepper direkt einsetzbar weil eine Standsicherheit nur nach dem Anhängen am Schlepper gewährleistet ist. Ferner wird die Standsicherheit durch eine oberhalb des Wickeltisches an einem Tragarm aufgehängte Wickelmaterialhaltevorrichtung durch den besonders hoch angeordneten Schwerpunkt beeinträchtigt.

Aus der EP-0543145 B1 ist ferner ein Rundballenwickelgerät bekannt, welches sich durch einen niedrigen Schwerpunkt auszeichnet, wobei die Wickelarme drehbar unterhalb des Wickeltisches gelagert sind. Diese Ausführung eignet sich besonders für die Arbeit auf einem abschüssigen Feld, weil durch den niedrigen Schwerpunkt die Gefahr des Umkippens gegenüber der zuvor genannten bekannten Ausführung vermieden wird. Nachteilig wirkt sich hingegen die Baulänge der an den Schlepper angehängten Ballenpresse und Wickelvorrichtung aus, besonders wenn in engen Kurven der Schlepper mit dem angehängten Gerät über Zufahrtsstraßen an das Feld herangeführt wird und bei Wendemanövern im Feld. Bei unebenen Gelände können weitere Schwierigkeiten durch ein Aufsetzen der Schlepperkombination auf Erdhügel oder dergleichen entstehen.

Aus der DE-PS 41 20 733 ist im Weiteren eine fahrbarer Ballenpresse mit einer angebauten Wickelvorrichtung bekannt, bei der die Ballenpresse und Wickelvorrichtung durch einen starren Trägerrahmen miteinander verbunden sind und der Transport des Rundballens durch eine auschließlich horizontal bewegliche Transportvorrichtung zwischen der Ballenpresse und der Wickelvorrichtung erfolgt. Nachteilig bei dieser Ausführung ist einerseits die starre Baueinheit, welche zu den vorgenannten Problemen führt und andererseits die Übergabe des Rundballens von der Transportvorrichtung zum Wickeltisch erschwert ist, weil der Rundballen über die seitlich erhöhten Rollen des Wickeltisches angehoben werden muß. Das Anheben des Rundballens erfolgt in diesem Fall über einen Ladebügel, welcher mit der Transportvorrichtung schwenkbar verbunden ist und das relativ große Gewicht der Rundballen bewältigen muß. Des Weiteren ist der Tragarm für die Wickelvorrichtung am hinteren Ende des Rahmengestells angeordnet, wobei der Drehpunkt der Wickelarme oberhalb des Wickeltisches liegt und somit der Schwerpunkt der Wickelvorrichtung sehr hoch angeordnet ist und zu Problemen im abschüssigen Gelände führen kann. Aufgrund des starren Rahmengestells ist diese Kombination aus Ballenpresse und Wickelvorrichtung nicht verkürzbar und führt bei Kurvenfahrten im Gelände und auf Straßen zu einem großen Wendekreis des hinteren Rahmengestells mit der Wickelvorrichtung.

Der Erfindung liegt die Aufgabe zugrunde, eine Vorrichtung zum Pressen und Umwickeln von Rundballen zu schaffen, bei der einerseits ein kontinuierliches Arbeiten möglich ist und andererseits eine raumsparende und kurzbauende Einheit mit einem niedrigen Schwerpunkt geschaffen wird, welche zu dem zu einer besseren Handhabbarkeit im Gelände und auf der Straße führt.

Erfindungsgemäß ist zur Lösung der Aufgabe in vorteilhafter Weise vorgesehen, daß die Transportvorrichtung den fertigen Rundballen nach Auswurf aus der Ballenpresse durch eine zumindest in einem Teilbereich gleichzeitige vertikale und horizontale Bewegung nach hinten anhebend zur Verpackungsvorrichtung bewegt.

Durch die besondere Anordnung und Bewegung der Transportvorrichtung, mit einem gleichzeitigen Verfahren nach hinten und anheben des Rundballens, zumindest über einen Teilbereich kann der Schwerpunkt der Ballenpresse auf einem niedrigen Niveau gehalten werden und der Auswurf des Rundballens aus der Ballenpresse kann in vorteilhafter Weise selbsttätig nach hinten durch das Eigengewicht des Rundballens unmittelbar auf die Transportvorrichtung erfolgen. Die Transportvorrichtung wird im Weiteren durch die vertikale und horizontale Bewegung mit samt dem Rundballen angehoben und der eigentlichen Wickelvorrichtung zugeführt. Der besondere Vorteil liegt hierbei darin, daß der fertig gewickelte Rundballen mit einem erheblichen Eigengewicht nicht über eine weitere Hebevorrichtung angehoben zu werden braucht, um in die geeignete Wickelposition zu gelangen, wodurch ein verringerter Arbeitsaufwand notwendig wird. Im Weiteren besteht die Möglichkeit, einen kontinuierlichen Arbeitsprozeß ablaufen zulassen, weil einerseits in der Ballenpresse bereits ein neuer Rundballen gewickelt werden kann, während in der Wickelvorrichtung der bereits ausgeworfene Rundballen umwickelt wird. Nach Beendigung des Wickelvorganges, welcher vor Fertigstellung des nächsten Rundballens erfolgt, wird zunächst der umwickelte Rundballen abgelegt und so dann mittels der abgesenkten Transportvorrichtung der nächste aus der Ballenpresse ausgeworfene Rundballen aufgefangen und ebenfalls der Wickelvorrichtung zugeführt. Durch diesen rationellen und kontinuierlich ablaufenden Arbeitsprozeß brauchen die fertigen Rundballen zwischendurch nicht auf dem Boden abgelegt und zu einem späteren Zeitpunkt wieder angehoben zu werden, wobei ferner in vorteilhafter Weise keine besonderen Ladebügel oder Hebevorrichtungen notwendig sind, die den Rundballen anheben müssen, weil die Transportvorrichtung gleichzeitig die horizontale Bewegung und das Anheben des Rundballens vornimmt.

In weiterer vorteilhafter Ausgestaltung der Erfindung kann die Transportvorrichtung aus einem zumindest in einem Teilberich gleichzeitig vertikal und horizontal beweglichen Wickeltisch bestehen, so daß die Anzahl der beweglichen und unbeweglichen Komponenten der Verpackungsvorrichtung weiter verringert und gleichzeitig eine Kostenersparnis erzielt werden kann.

Um einen schnellen und kontinuierlichen Arbeitsprozeß durchführen zu können ist ferner vorgesehen, daß die Klappenöffnung der Ballenpresse unabhängig von der Position der Transportvorrichtung mit oder ohne Rundballen zu öffnen oder zu schließen ist.

In weiterer Ausgestaltung der Erfindung ist vorgesehen, daß der Wickeltisch aus einem Rahmenelement besteht, in dem mindestens zwei antreibbare und quer zur Längsrichtung beabstandete Wickelrollen drehbar gelagert sind, welche in Längsrichtung angeordnete Wickeltischbänder aufweisen. Die Wickelrollen und Wickeltischbänder sind zur Aufnahme des ausgeworfenen Rundballens aus der Ballenpresse vorgesehen und besitzen im Weiteren einen eigenen Antrieb, welcher die Rotation des Rundballens beim Umwickeln ermöglicht. Der Rundballen liegt hierbei während des Wickelvorganges sicher in der aus den Wickelrollen und Wickeltischbändern gebildeten Mulde.

Um die gleichzeitige horizontale und vertikale Bewegung der Transportvorrichtung bzw. des Wickeltisches zu ermöglichen ist im Weiteren vorgesehen, daß das Rahmenelement vier Hubrollenachsen aufweist, welche diametral und paarweise gegenüberliegend angeordnet und über eine Hubrolle in jeweils einer schräg verlaufenden und nach hinten ansteigenden Führungsschiene verschiebbar gelagert sind. Durch die Hubrollen wird die Reibung erheblich reduziert und ermöglicht einen leichtgängigen Transport der Transportvorrichtung bzw. des Wickeltisches mit Rundballen in Richtung zur Wickelvorrichtung.

In weiterer besonderer Ausgestaltung der Erfindung ist vorgesehen, daß die Führungsschienen jeweils diametral gegenüberliegend und parallel verlaufend mit dem Rahmengestell verbunden sind, wobei zumindest die hinteren Führungsschienen über ein Gelenk schwenkbar an dem Rahmengestell befestigt sind. Die Führungsschienen sind jeweils so angeordnet, daß der tiefste Punkt unterhalb des Ballenauswurfes der Ballenpresse liegt und der höchste Punkt unterhalb der Wickelvorrichtung, daß heißt der Wickeltisch wird nach der Aufnahme des Rundballens nach hinten bewegt und durch die schräg verlaufenden Führungsschienen gleichzeitig angehoben, wobei die Hubrollenachsen des Wickeltisches mit Hubrollen und Gleitlagern in den Führungsschienen über zumindest einen Stellzylinder verfahrbar gelagert sind. Durch die Schwenkbarkeit der hinteren Führungsschienen kann beispielsweise eine Absenkung des Wickeltisches nach hinten erreicht werden.

In weiterer Ausgestaltung der Erfindung ist vorgesehen, daß die Führungsschienen schräg verlaufend und nach hinten ansteigend ausgebildet sind, wobei zumindest an einem Ende ein horizontal verlaufender Führungsansatz ausgebildet ist. Der horizontal verlaufende Führungsansatz ist zur Fixierung des Wickeltisches in der Endposition vorgesehen und ermöglicht im Weiteren ein Halten des Wickeltisches mit einem geringen Kraftaufwand. Alternativ ist vorgesehen, daß die Führungsschienen des Wickeltisches im mittleren Bereich abgewinkelt oder gebogen ausgebildet sind. Jeweils einer Hubrolle des Wickeltisches ist jeweils eine Führungsschienen zugeordnet, so daß der Wickeltisch im Normalfall mit insgesamt vier Hubrollen und Führungsschienen auskommt.

Um eine größere Ballenpresse einsetzen zu können und größere Rundballen zu fertigen ist vorgesehen, daß die Führungsschienen des Wickeltisches im vorderen, unteren Bereich zunächst flach ansteigend und anschließend stärker ansteigend ausgebildet sind, so daß keine Behinderung beim Schließen der Klappenöffnung eintritt.

In weiterer besonderer Ausgestaltung der Erfindung ist in vorteilhafter Weise vorgesehen, daß das Rahmengestell mit den jeweils diametral gegenüberliegenden Führungsschienen mittels eines weiteren oder der vorhandenen Stellzylinder über ein Gelenk anhebbar ausgebildet ist und /oder daß die hinteren diametral gegenüberliegenden Führungsschienen über einen weiteren Stellzylinder nach Beendigung des Wickelvorganges nach hinten absenkbar ausgebildet sind. Durch diese besondere Ausgestaltung ergeben sich zwei weitere wesentliche Vorteile. Die Führungsschienen mit der Wickelvorrichtung können beispielsweise nach einer Blockierung des Wickeltisches durch einen Nutenstein oder dergleichen über den ersten Stellzylinder, welcher in zwei Richtungen verfahrbar sein muß, angehoben werden. Wenn der Wickeltisch innerhalb der Führungsschienen blockiert ist, schwenkt somit das Rahmengestell um das Gelenk nach oben und es wird eine Verkürzung der gesamten Baueinheit, bestehend aus Ballenpresse und Wickelvorrichtung, erzielt, welche somit zur einer Huckepackeinheit führt und wesentlich leichter im Gelände oder auf der Straße zu fahren ist. Die vorhandene Problematik der bekannten Ausführungen wird somit vermieden. Ein weiterer wesentlicher Vorteil besteht dann, wenn die beiden hinteren Führungsschienen, welche den hinteren Hubrollen zugeordnet sind, über einen weiteren Stellzylinder und um deren Drehachse nach hinten abgesenkt werden, wobei es sich beispielsweise um ein Gelenk handeln kann. In diesem Fall wird über den weiteren Stellzylinder der Abwurf des fertig umwickelten Rundballen im Gelände erleichtert, wobei der Rundballen selbsttätig vom Wickeltisch herabrollen kann und durch die geringe Bodenhöhe ohne Eigenbewegung auf dem Feld abgelegt werden kann.

In weiterer Ausgestaltung der Erfindung ist vorgesehen, daß nach Beendigung des Wickelvorganges und dem Absenken der hinteren Führungsschienen eine fest mit dem Rahmengestell verbundene Rolle gegen die Wickeltischbänder von unten drückt und die Wickeltischbänder im oberen Bereich spannt, so daß der Rundballen aus der Mulde zwischen den beiden Wickelrollen angehoben wird und eigenständig vom Wickeltisch rollen kann.

In weiterer besonderer Ausgestaltung der Erfindung ist vorgesehen, daß das Rahmengestell bzw. die hinteren Führungsschienen eine Ballenbremse aufweisen, welche schwenkbar und quer zur Längsrichtung mit dem Rahmengestell bzw. den Führungsschienen verbunden ist, wobei die Ballenbremse unmittelbar durch einen weiteren Stellzylinder oder über einen Umlenkhebel und eine Schubstange absenkbar ist und nach dem Aufsetzen der hinteren Führungsschienen auf dem Boden die Ballenbremse löst und eine punktgenaue Ablage des Rundballens auf dem Gelände ermöglicht. Durch diese besondere Ausbildung der Erfindung besteht somit während der kontinuierlichen Arbeitsweise die Möglichkeit die Rundballen exakt und punktgenau möglichst ballenschonened ohne eine Eigenbewegung auf dem Feld abzulegen.

Die Ballenbremse besteht aus zwei seitlichen um jeweils einen Drehpunkt verschwenkbare Tragarme, welche über eine Querstange miteinander verbunden sind und den Rundballen halten, wobei der Drehpunkt jeweils auf einer an den hinteren Führungsschienen befestigten Konsole angeordnet ist. Die Bewegung der Ballenbremse erfolgt gemäß einem Ausführungsbeispiel der Erfindung unmittelbar durch den Stellzylinder der hinteren Führungsschienen, wobei der Stellzylinder zum Absenken der hinteren Führungsschienen einenends mittig an einem um eine Drehachse verschwenkbaren Hebelarm und anderenends an den hinteren Führungschienen befestigt ist und wobei der Hebelarm zum Anheben der hinteren Führungsschienen abstützend an einem Anschlag anliegt und an dem freien Ende des Hebelarms eine Schubstange befestigt ist, die mit einem um eine Drehachse verschwenkbaren Winkelhebel verbunden ist, an dessen zweiten Ende eine mit der Ballenbremse verbundene Schubstange befestigt ist. Wenn die hinteren Führungsschienen eine Endposition erreicht haben, wird die Bewegung des auseinander fahrenden Stellzylinders durch den vom Anschlag weg bewegten Hebelarm und die erste Schubstange auf den Winkelhebel übertragen und durch die dadurch bewegte zweite Schubstange die Ballenbremse gelöst. Beim Anheben der hinteren Führungsschienen wird der Hebelarm zunächst auf den Anschlag zu bewegt und somit die Ballenbremse in die Ausgangsstellung zurückgefahren, sobald der Hebelarm am Anschlag anliegt erfolgt das Anheben der hinteren Führungsschienen und somit wird die Ausgangsposition des Wickeltisches erreicht.

Alternativ besteht die Möglichkeit, daß das Rahmengestell im hinteren Bereich einen beim Absenken der hinteren Führungsschienen auf den Boden aufsetzenden Fuß aufweist, wodurch die Bewegung der hinteren Führungsschienen gestoppt und die Ballenbremse durch die Hebelmechanik gelöst wird.

Im Zusammenhang mit den verschwenkbar gelagerten Führungsschienen an dem Rahmengestell besteht im weiteren die Möglichkeit, daß der Wickeltisch mit einer elektronischen Neigungsregelung ausgestattet ist, welche den Wickeltisch während des Wickelvorganges unabhängig von der Arbeitslage der Verpackungsvorrichtung in der Horizontalen hält.

In weiterer Ausgestaltung der Erfindung ist vorgesehen, daß die Verbindung zwischen Ballenpresse und Verpackungsvorrichtung starr durch ein Rahmengestell oder durch zwei über mindestens ein Drehgelenk miteinander verbundene Rahmengestelle erfolgt, welches eine horizontale Schwenkbewegung vorsieht. Die Ausführung mit einer starren Verbindung zwischen Ballenpresse und Verpackungsvorrichtung eignet sich vorteilhafter Weise für ein ebenes Gelände, während für bergiges und abschüssiges Gelände eine vertikale verschwenkbare Ausführung mit jeweils einem Rahmengestell für die Ballenpresse und die Verpackungsvorrichtung empfehlenswert ist und somit ein Aufsetzen des Schleppers mit angehängtem Gerät verhindert.

Im Falle zweier getrennter Baueinheiten für Ballenpresse und Verpackungsvorrichtung ist ferner vorgesehen, daß das Rahmengestell der Verpackungsvorrichtung über eine verriegelbare starre Aufhängung mit dem Rahmengestell der Ballenpresse verbindbar ist, so daß eine stabile Zugeinheit mit niedrigem Schwerpunkt geschaffen wird.

Für den Fall, daß der Durchmesser der Rundballen vergrößert werden soll wird in vorteilhafter Weise vorgeschlagen, daß die Achse der Laufräder gegenüber der Ballenpresse entgegen der Hauptfahrtrichtung durch eine dem Schwerpunkt angepaßte Verlagerung nach hinten und/oder unten versetzt angeordnet ist oder zusätzliche anhängbare Laufräder für die Verpackungsvorrichtung vorgesehen sind, um das Gewicht aufzunehmen und gleichzeitig den Schwerpunkt niedrig zu halten, wobei die Ballenpresse für größere Rundballen angehoben wird.

Um das Auswerfen der Rundballen bei vorhandener Verpackungsvorrichtung zu ermöglichen und die Kippgefahr auszuräumen ist ferner vorgesehen, daß die Verpackungsvorrichtung ein Traggestell für einen Wickelarm aufweist, welches aus zumindest zwei vertikalen Stützen und mindestens zwei miteinander im Drehpunkt der Wickelarme verbundene horizontale oder schräg verlaufende Stützen besteht, wobei die vertikalen Stützen seitlich neben der Ballenauswurfsöffnung der Ballenpresse mit dem Rahmengestell verbunden sind und das Traggestell V- oder U-förmig zur Ballenpresse hin geöffnet ist und die seitlichen Stützen derart beabstandet sind, daß die Klappenöffnung der Ballenpresse zwischen den seitlichen Stützen frei beweglich ist.

Für besonders große Rundballen mit einem hohen Eigengewicht ist vorgesehen, daß die Verpackungsvorrichtung oder das Rahmengestell mit zumindest einem drehbar gelagerten und mitlaufenden Rad ausgestattet ist, um das Gewicht aufzunehmen.

Die Stellzylinder der Ballenpresse und Verpackungsvorrichtung können hierbei beispielsweise hydraulisch oder aber auch elektromotorisch betätigbar sein.

Die Erfindung wird im Weiteren anhand der Figuren näher erläutert.

Es zeigt
- Fig.1: eine Seitenansicht einer Ballenpresse mit Anbauvorrichtung für eine Verpackungsvorrichtung,
- Fig.2: eine Draufsicht der Ballenpresse gemäß Figur 1,
- Fig.3: eine Seitenansicht der erfindungsgemäßen Verpackungsvorrichtung mit Führungsschienen und Anhängevorrichtung,
- Fig.4: eine Draufsicht auf die Verpackungsvorrichtung gemäß Figur 3,
- Fig. 5: eine schematische Seitenansicht der Ballenpresse mit geöffneter Haube und Transportvorrichtung zur Aufnahme des Rundballens sowie einem skizzierten Bewegungsablauf beim Auswurf,
- Fig. 6: eine schematische Seitenansicht der Rundballenpresse und Transportvorrichtung mit Bewegungsablauf des Rundballens beim Transport zur Verpackungsvorrichtung,
- Fig. 7: eine schematische Seitenansicht der Rundballenpresse und Verpackungsvorrichtung mit Bewegungsablauf des Rundballens beim Ablegen von dem Wickeltisch,
- Fig. 8: eine vereinfachte Seitenansicht der Verpackungsvorrichtung in einer angehobenen Position zum Fahren auf der Straße,
- Fig. 9: eine vereinfachte Seitenansicht der Verpackungsvorrichtung mit der Wickelposition und der abgesenkten Position der hinteren Führungsschienen,
- Fig. 10: einen Teilschnitt gemäß der Verbindungslinie A - A durch die Führungsschienen, Hubrolle und Hubrollenachse,
- Fig.11: einen weiteren Teilschnitt gemäß der Verbindungslinie B-B und
- Fig. 12: eine vereinfachte Seitenansicht der Verpackungsvorrichtung gemäß Figur 3 mit Ballenbremse.

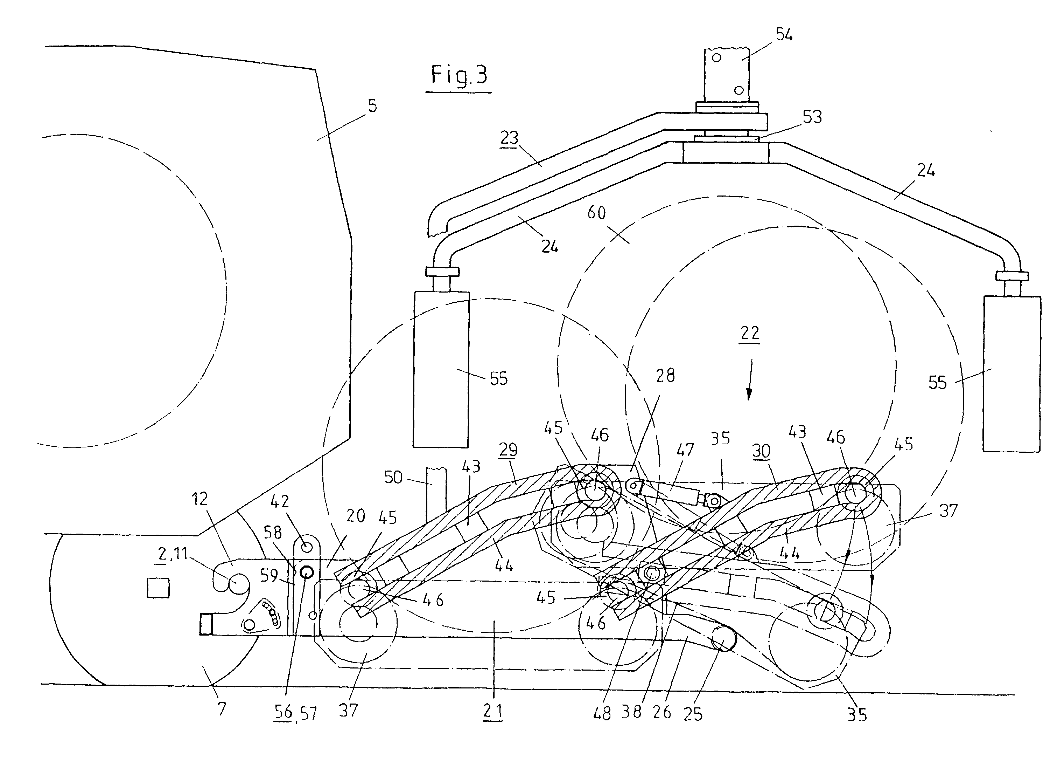

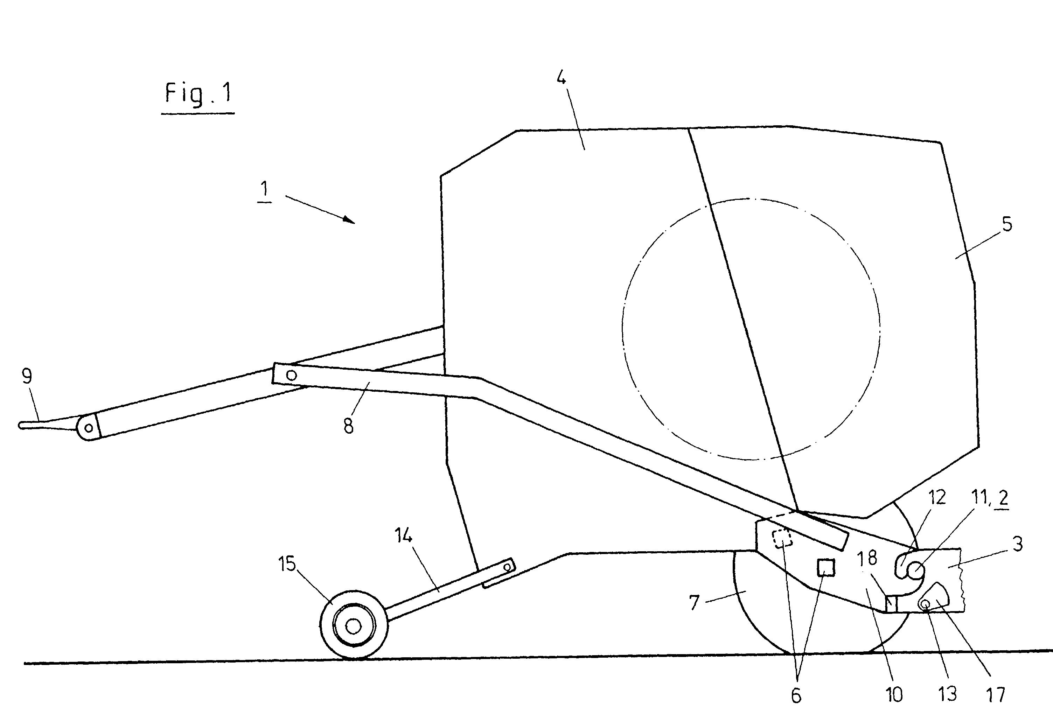

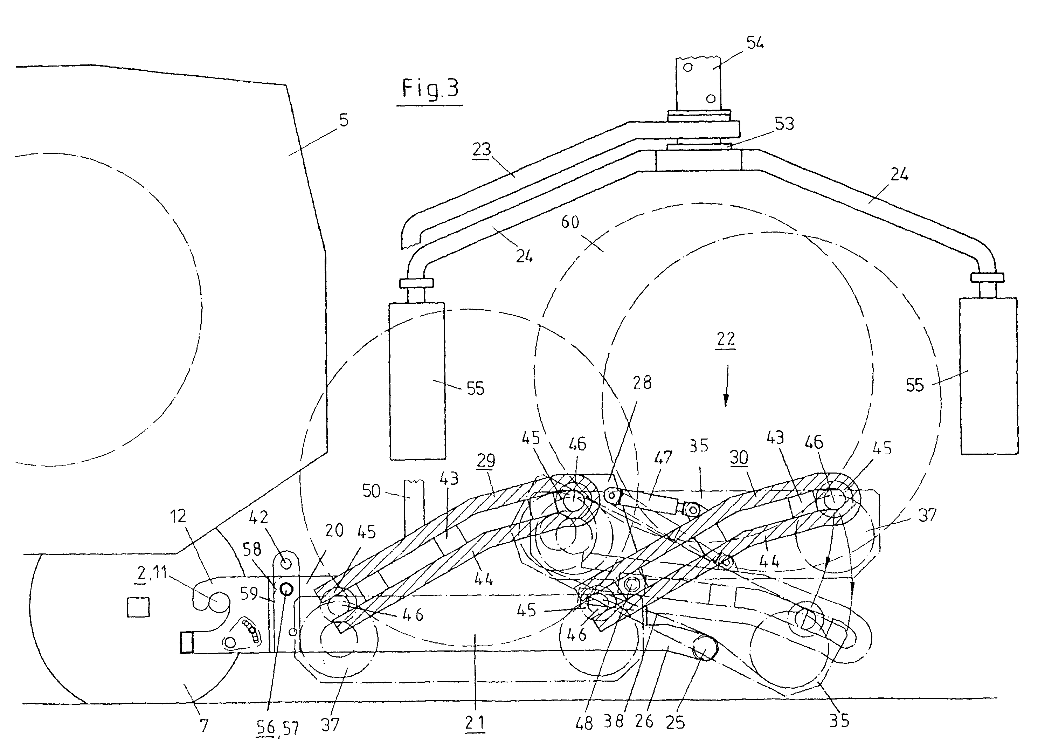

Figur 1 zeigt eine Seitenansicht einer Ballenpresse 1 mit Anbauvorrichtung 2 für die in Figur 3 gezeigte Verpackungsvorrichtung 3. Die Ballenpresse 1 besteht aus einem kastenförmigen Gehäuse 4, welches den nicht dargestellten Wickelmechanismus für den Rundballen aufnimmt und im hinteren Bereich eine Klappenöffnung 5 zum Auswurf des fertig gewickelten Rundballens aufweist. Das Gehäuse ist fahrbar auf einer hinteren Achse 6 mit zwei seitlichen Rädern 7 gelagert, wobei am Gehäuse 4 seitlich vorbeigeführte Längsstreben 8 ausgebildet sind, welche nach vorne zusammenlaufenden mit der Zugdeisel 9 für den Schlepper einerseits verschraubt sind und andererseits nach hinten bis zur Achse 6 reichen und eine Konsole 10 aufweisen, in welcher die Achse 6 drehbar gelagert ist, so daß die Zugkräfte unmittelbar auf die Achse 6 einwirken und das Gehäuse 4 frei von derartigen Belastungen ist. Im Normalfall ist die Achse 6 in der oberen Position angeordnet, zur Schwerpunktverlagerung und zum besseren Auswurf des fertigen Rundballens durch das Eigengewicht kann die Achse 6 in der gestrichelten Position angeordnet sein. An die seitlichen Konsolen 10 ist einerseits die Anbauvorrichtung 2 befestigt, welche aus einem Zapfen 11 zum Einhängen der korrespondierenden Aufhängung 12 der Verpackungsvorrichtung 3 vorgesehen ist. Zur starren Verbindung der Verpackungsvorrichtung 3 mit der Ballenpresse 1 ist im Weiteren ein Verriegelungsbolzen 13 vorgesehen, welcher unterhalb des Zapfens 11 durch eine Bohrung einschiebbar ausgebildet ist und einen verschwenkbaren Verriegelungskeil 17 aufweist und ferner ein Anschlag 18 an der Konsole 10 vorgesehen ist, an welchem die Stirnfläche der Aufhängung 12 zu liegen kommt. Zum Abstellen der Ballenpresse 1 ist vorne am Gehäuse 4 eine Strebe 14 mit einem Stützrad 15 vorgesehen, welches auf dem Boden aufliegt, wenn die Ballenpresse 1 vom Schlepper abgehängt wird.

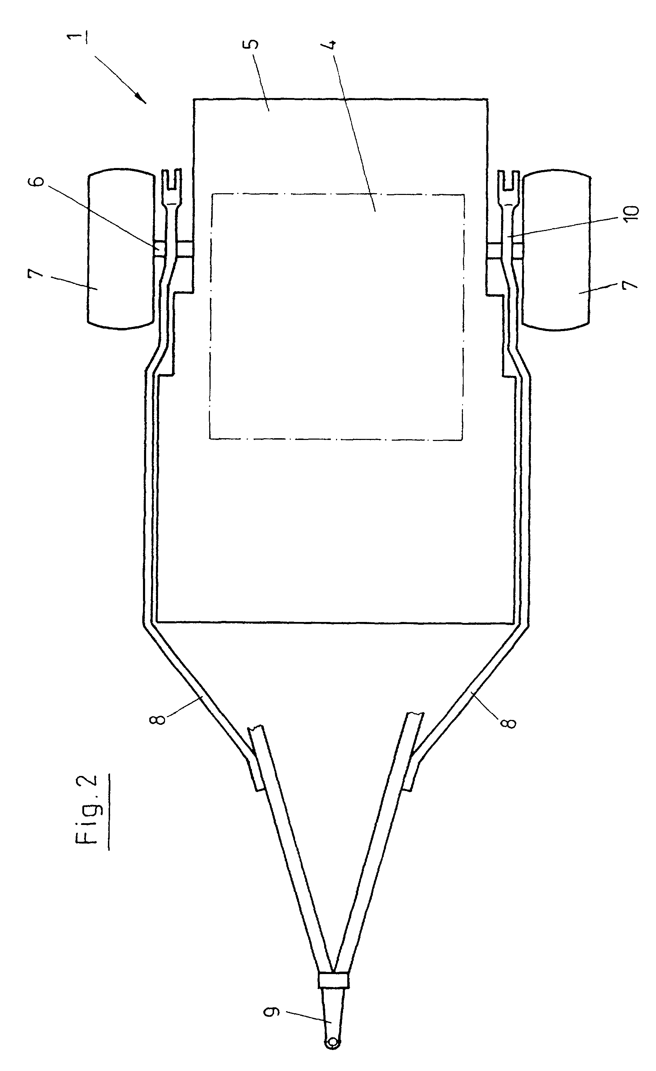

Figur 2 zeigt eine Draufsicht der Ballenpresse 1 gemäß Figur 1 mit dem kastenförmigen Gehäuse 4 und der hinteren Klappenöffnung 5. Aus dieser Draufsicht sind sehr gut die seitlich am Gehäuse 4 vorbeigeführten Längsstreben 8 erkennbar, welche vorne mit der Zugdeisel 9 verbunden sind und hinten in den seitlichen Konsolen 10 die Anbauvorrichtung 2 enden. In den Konsolen 10 ist im weiteren die Achse 6 mit ihren Rädern 7 drehbar gelagert, so daß die Ballenpresse 1 als Zugeinheit für einen Schlepper mitlaufend ausgebildet ist. Über die Anbauvorrichtung 2 kann ebenso die angehängte Verpackungsvorrichtung 3 durch den Schlepper gezogen werden und führt zu einer unmittelbaren Zugkraftübertragung.

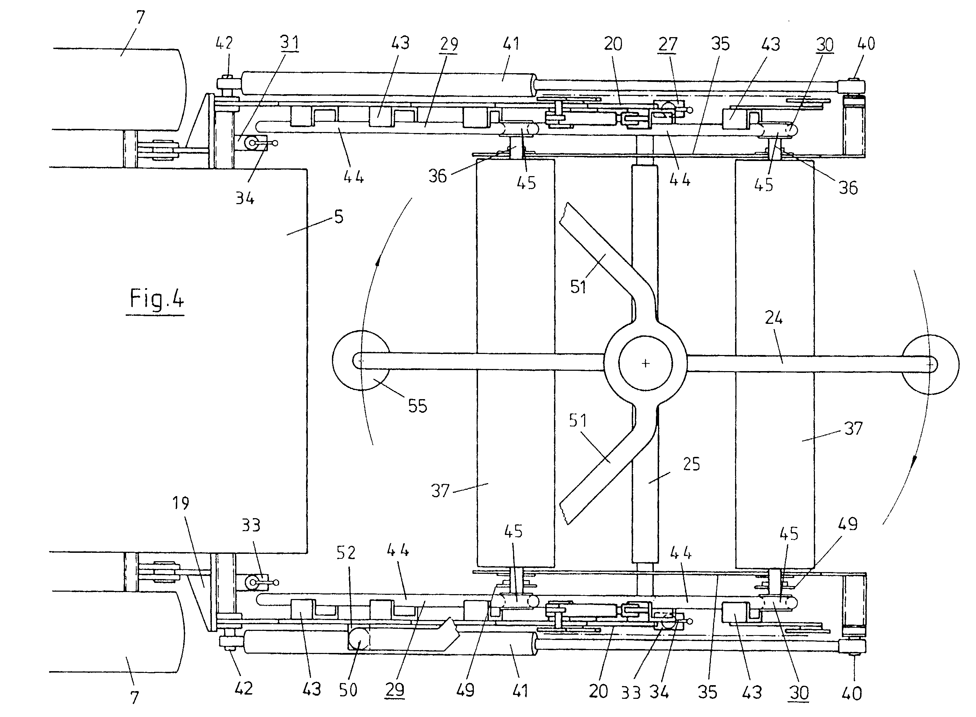

Figur 3 zeigt eine Seitenansicht und Figur 4 eine Draufsicht der erfindungsgemäßen Verpackungsvorrichtung 3 in einer angehängten Position an der Ballenpresse 1, welche nur mit der Anbauvorrichtung 2, den Rädern 7 und der Klappenöffnung 5 dargestellt ist. Die Verpackungsvorrichtung 3 besteht aus zwei parallel angeordneten Wicklerseitenwänden 20, welche das Rahmengestell 21 der Verpackungsvorrichtung 3 bilden, einem Wickeltisch 22 sowie einem Tragarm 23 für die drehbar gelagerten Wickelarme 24. Die Wicklerseitenwände 20 stellen die tragenden Elemente der Verpackungsvorrichtung 3 dar und sind über eine quer liegende Rolle 25 bzw. deren Drehachse beabstandet miteinander verbunden, wobei ggfs. weitere Querstreben zur Stabilitätsverbesserung vorgesehen sein können. Zur Ballenpresse 1 hin sind die Wicklerseitenwände 20 über eine Konsole 19 mit einem Querrohr auf das Maß der Anbauvorrichtung 2 derart reduziert, daß die Aufhängung 12 auf dem Zapfen 11 der nach hinten versetzten Anbauvorrichtung 2 zuliegen kommt. Alternativ können die Wicklerseitenwände 20 zweifach abgewinkelt und auf das Maß der Anbauvorrichtung 2 zurückgeführt sein. Die Wicklerseitenwände 20 erstrecken sich im Übrigen in Längsrichtung der gesamten Zugeinheit und weisen einen hinteren, leicht nach unten verlaufenden Schenkel 26 zur Befestigung jeweils einer Abstellstütze 27 sowie einen nach oben ragenden trapezförmigen Ansatz 28 auf, welcher u. a. zur Befestigung der vorderen Führungsschienen 29 und schwenkbeweglichen Lagerung der hinteren Führungsschienen 30 vorgesehen ist. Im vorderen Bereich der Wicklerseitenwände 20 ist jeweils eine Abstellstütze 31 mit den Wicklerseitenwänden 20 verbunden, welche zum Teil unmittelbar mit den Wicklerseitenwänden 20 oder über eine entsprechend geformte Konsole verschweißt sind. Die Abstellstützen 27, 31 bestehen jeweils aus einem höhenverstellbaren Fußteil 33, welches über eine Kurbel 34 bedienbar ist. Die Abstellstützen 27, 31 werden mittels der Kurbel 34 heruntergefahren und ermöglichen somit das Abstellen der Verpackungsvorrichtung 3 nach dem Lösen von der Ballenpresse 1.

Zwischen den Wicklerseitenwänden 20 ist der Wickeltisch 22 horizontal und vertikal verfahrbar angeordnet. Der Wickeltisch 22 besteht aus zwei parallel zu den Wicklerseitenwänden 20 angeordneten Wickeltischseitenwänden 35, welche durch die vordere und hintere Achse 36 der Wickelrollen 37 beabstandet gehalten sind und ggfs. durch weitere Querstreben verstärkt werden können. Die Wickelrollen 37 sind in Längsrichtung mit mehreren Wickeltischbändern 38 bespannt, auf welchen der Rundballen zu liegen kommt. Ferner sind die Wickelrollen 37 jeweils auf einer Seite mit einem Antriebsrad in Form eines Zahnkranzes 49 ausgestattet, welcher über beispielsweise einen Kettenantrieb antreibbar ist und während des Wickelvorganges für eine Drehung des Rundballen über den Umfang sorgt, damit dieser über die gesamte Lauffläche und die Stirnflächen eingewickelt werden kann. Der Wickeltisch 22 weist ferner am hinteren Ende einen jeweils an die Wickeltischseitenwände 35 angeflanschten Zapfen 40 auf, der die Befestigung der beiden seitlich außen liegenden Stellzylinder 41 ermöglicht. Die Stellzylinder 41 sind mit ihrem feststehenden Teil jeweils über einen weiteren Zapfen 42 mit den Wicklerseitenwänden 20 schwenkbeweglich verbunden und ermöglichen somit bei einem Ein- oder Ausfahren die Bewegung des Wickeltisches 22 innerhalb der Führungsschienen 29, 30.

Die vorderen und hinteren Führungsschienen 29, 30 sind an der Innenseite der Wicklerseitenwände 20 befestigt und sind jeweils diametral gegenüberliegend und parallel verlaufend zu den Führungsschienen 29,30 derselben Wicklerseite angeordnet, wobei die Führungsschienen 29,30 schräg nach hinten ansteigend angeordnet sind. Im gezeigten Ausführungsbeispiel sind die vorderen Führungsscheinen 29 ortsfest mit den Wicklerseitenwänden 20 verbunden, während die hinteren Führungsschienen 30 über ein Drehgelenk 48, wie aus der Figur 3 ersichtlich, mit den Wicklerseitenwänden 35 verbunden sind, so daß unabhängig von der Position des Wickeltisches 22 die hinteren Führungsschienen 30 abgesenkt werden können, um beispielsweise den Rundballen abzulegen.

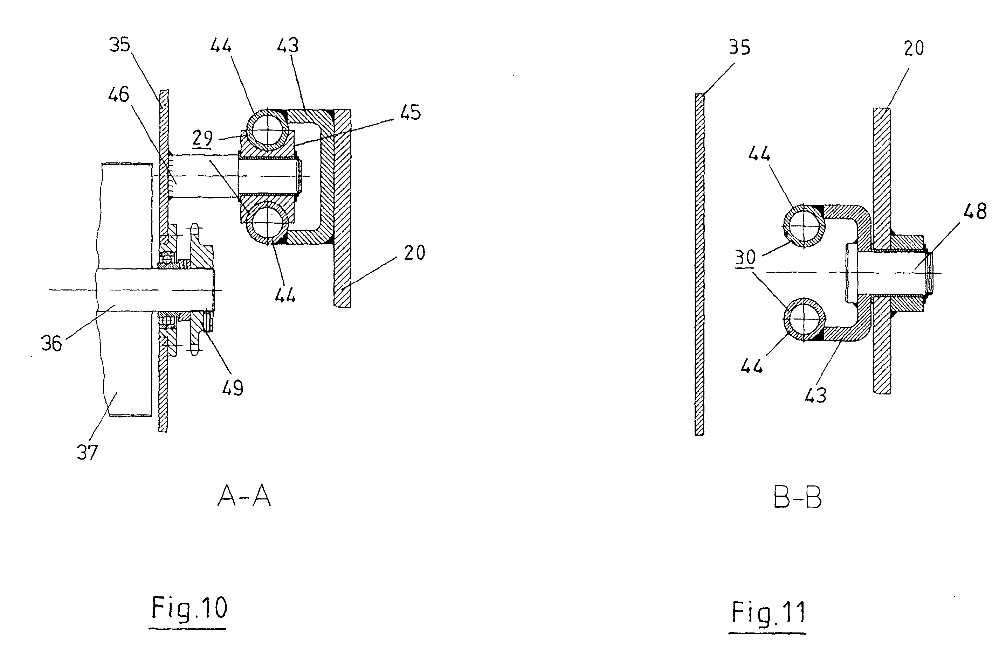

Die Führungsschienen 29, 30 bestehen jeweils aus einer U-förmig gebogenen Konsole 43, welche an ihren freien Schenkelenden mit einem Rundrohr 44 verschweißt sind und die Rundrohre 44 in einem genau definierten Abstand zueinander angeordnet sind und quasi eine Rollenbahn bilden. Die Rundrohre 44 sind auf dem zum Ballenwickeln hin gerichteten Ende offen, während das in entgegengesetzter Richtung weisende Ende geschlossen ist und der hintere Teilbereich eine Abknickung im mittleren Bereich und eine Abknickung zum Ende hin aufweist, um einerseits eine unterschiedliche Steigung der Rundrohre 44 zu ermöglichen und somit den Wickeltisch unterschiedlich anzuheben und andererseits eine stabile Endposition des Wickeltisches zu erreichen Die Konsolen 43 können über die gesamte Länge der Führungsschienen 29, 30 ausgebildet sein, oder aber, wie im Ausführungsbeispiel gezeigt, aus mehreren beabstandeten Konsolen 43 bestehen, die jeweils einer Führungschiene 29, 30 zugeordnet sind. Zwischen den beiden Rundrohren 44 läuft eine Hubrolle 45, welche mit ihrer Radialfläche an den Radius des Rundrohres 44 angepaßt ist und über ein Gleitlager auf einer Hubrollenachse 46 befestigt ist. Die Hubrollenachsen 46 sind entsprechend den Führungsschienen 29, 30 diametral gegenüberliegend und jeweils auf einer Seite des Wickeltisches 22 beabstandet und nach außen weisend angeordnet und mit den Wickeltischseitenwänden 35 verschweißt. Die genaue Anordnung ist aus dem Teilschnitt A - A der Figur 11 entnehmbar.

Jeweils eine Führungsschiene 29 bzw. 30 ist einer Hubrollenachse 46 bzw. Hubrolle 45 des Wickeltisches 22 zugeordnet, so daß der Wickeltisch 22 gleichzeitig horizontal und vertikal verfahrbar zwischen den Wicklerseitenwänden 20 gelagert ist. Die Positionsverlagerung wird durch die seitlich angeordneten und beaufschlagbaren Stellzylinder 41 vorgenommen. Dadurch, daß die beiden Achsen 36 der Wickelrollen 37 über die Wickeltischseitenwände 20 in einem fest vorgegebenen Abstand gehalten sind, können diese nur parallel und gleichzeitig horizontal und vertikal verfahren werden.

Die Stellzylinder 41 können im Weiteren dazu verwendet werden, die gesamte Verpackungsvorrichtung 2 gegenüber der Ballenpresse 1 anzuheben, wenn zwischen dem Anlenkpunkt des feststehenden Teils des Stellzylinders 41 und den Wicklerseitenwänden 20 ein bewegliches, horizontales Gelenk 56 angeordnet und der Wickeltisch 22 in den Führungsschienen 29, 30 durch beispielsweise einen Nutenstein blockiert ist. Die Ausführung des beweglichen Gelenks 56 ist beispielsweise der Figur 3 entnehmbar, in der das Gelenk 56 zwischen Aufhängung 12 und den nach hinten fortgeführten Wicklerseitenwänden 20 angeordnet ist. Das Gelenk 56 besteht aus einem Bolzen 57 und einer vertikalen Anschlagfläche 58 der Aufhängung 12, an der die vordere nach oben abgerundete Kante 59 der Wicklerseitenwand 20 anliegt und durch den in einer Bohrung einliegenden Bolzen 57 gehalten wird. In der angehobenen Position der Verpackungsvorrichtung 2 wird die Bauweise der Zuganordnung verkürzt und die Manövrierfähigkeit erhöht, wobei gleichzeitig auch eine Rückwärtsfahrt der Zugeinheit ermöglicht wird.

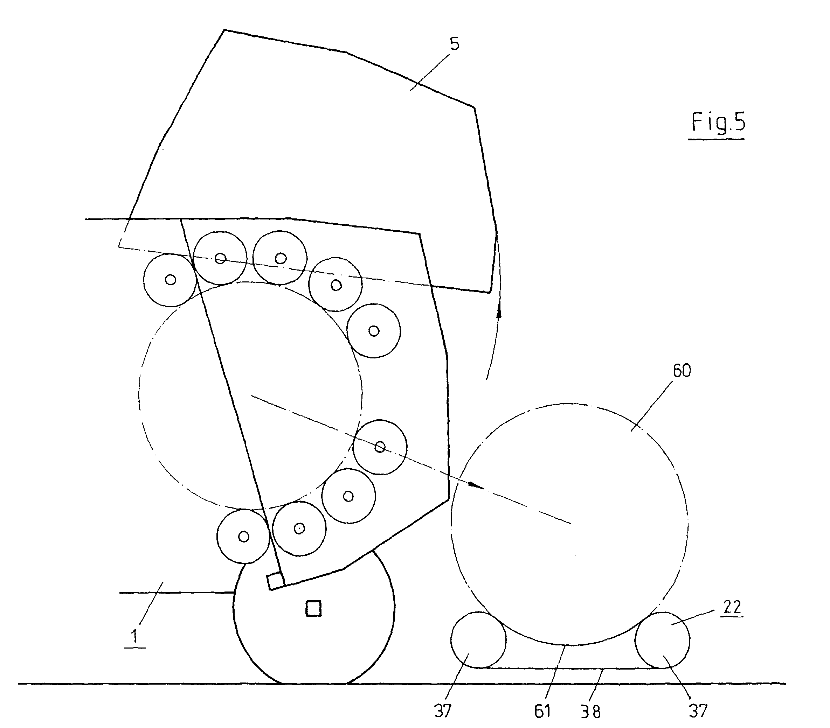

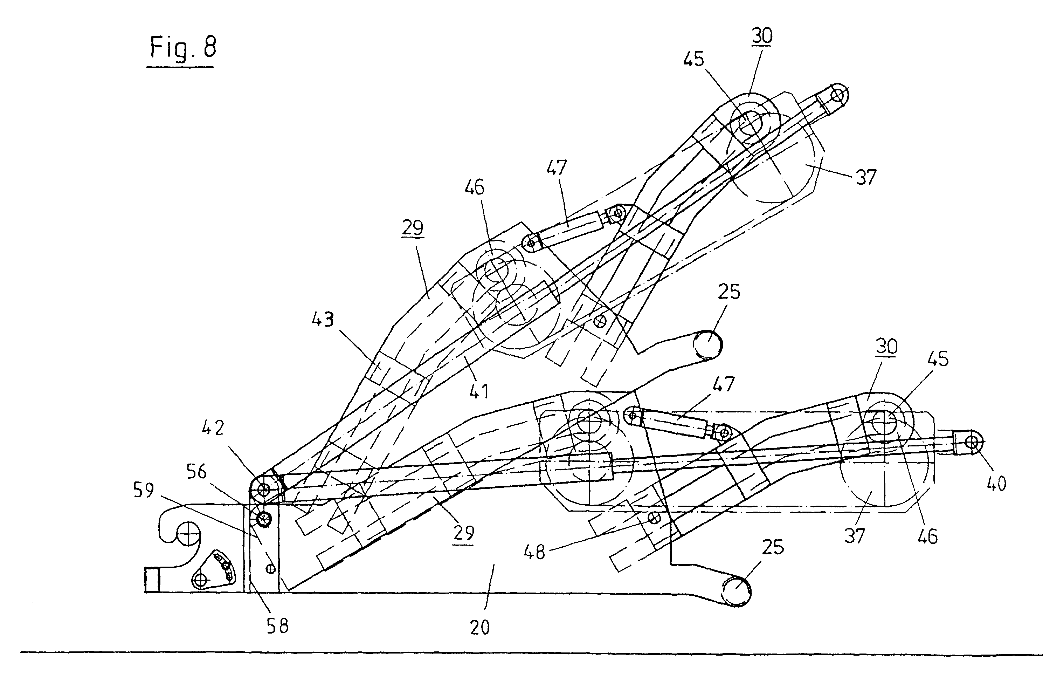

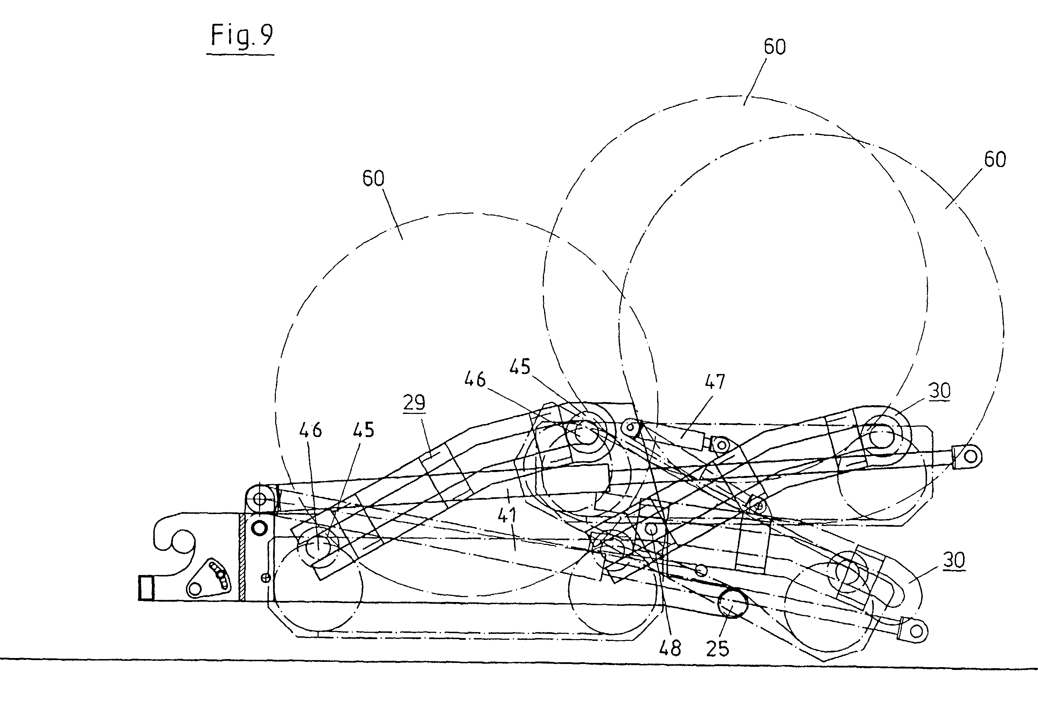

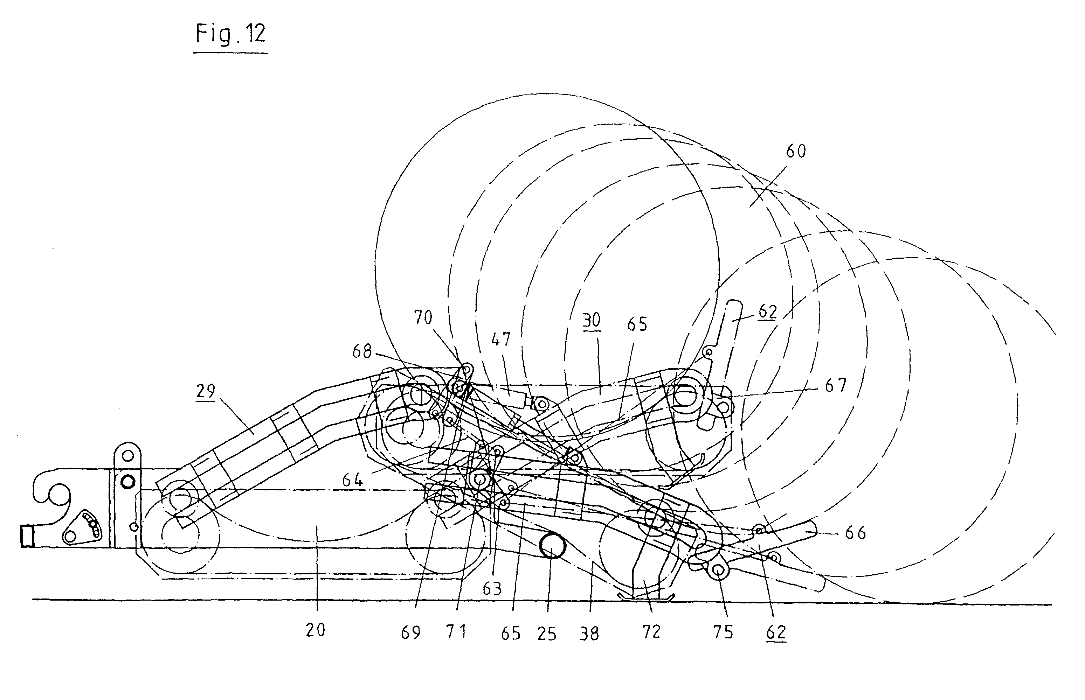

Über einen weiteren Stellzylinder 47 besteht darüber hinaus die Möglichkeit, die hinteren Führungsschienen 30, welche über ein Drehgelenk 48 verschwenkbar an den Wicklerseitenwänden 20 gelagert sind, nach hinten abzusenken und somit das selbsttätige Abrollen des fertig umwickelten Rundballens zu erreichen. Der genaue Bewegungsablauf des Rundballens beim Ausstoß aus der Ballenpresse 1, während des Transportes bzw. beim Ablegen auf dem Feld ist in den Figuren 5 bis 7 gezeigt, während in Figur 8 das Anheben der Verpackungsvorrichtung 2 und in Figur 9 und 12 das Absenken der hinteren Führungsschienen 30 gezeigt ist.

Oberhalb des Wickeltisches 22 ist der Tragarm 23 angeordnet, welcher aus zwei vertikalen Stützen 50 und zwei horizontalen Querstreben 51 besteht. Die horizontalen Stützen 50 sind in ihrem unteren Fußpunkt über eine Konsole 52 mit der Wicklerseitenwand 20 verbunden, beispielsweise verschraubt oder verschweißt. Die oberen Querstreben 51 sind mittig über dem Wickeltisch 22 zusammengeführt und weisen ein Lager 53 auf, in welchem die beiden Wickelarme 24 horizontal drehbar gelagert und über einen Antriebsmotor 54 bewegbar sind. An den unteren freien Enden der Wickelarme 24 sind die Folienrollen 55 befestigt, welche zum Einwickeln der Rundballen vorgesehen sind. Der Wickelvorgang gestaltet sich derart, daß die beiden Wickelrollen 37 über die Zahnkränze 49 angetrieben werden und somit den Rundballen drehen, während gleichzeitig die beiden Wickelarme 24 mit den Folienrollen 55 um den Rundballen herumgeführt werden. Die besondere Art der Aufhängung des Tragarmes 23, seitlich an den Wicklerseitenwänden 21 führt im Weiteren dazu, daß die Klappenöffnung 5 der Ballenpresse 1 freibeweglich zwischen den horizontalen Stützen 50 und vertikalen Querstreben 51 bewegbar ist und somit der Rundballen ohne Behinderung ausgeworfen werden kann. Eine Voraussetzung ist jedoch, daß die beiden Wickelarme 24 in ihrer Grundposition annähernd quer zur Fahrtrichtung festgelegt sind. Gleiches gilt beim Anheben der Verpackungsvorrichtung 2.

Figur 5 zeigt eine schematische Seitenansicht der Ballenpresse 1 mit geöffneter Klappenöffnung 5 und der Transportvorrichtung zur Aufnahme des Rundballens 60 sowie dem Bewegungsablauf beim Auswurf. Der Rundballen 60 fällt nach dem Öffnen der Klappenöffnung 5 auf die Transportvorrichtung, d. h. den Wickeltisch 22, welcher über die vorher beschriebenen Stellzylinder 41 in die unterste Position unterhalb der Klappenöffnung 5 gefahren wurde und bleibt in der Mulde 61 zwischen den beiden Wickelrollen 37 und den Wickeltischbändern 38 liegen.

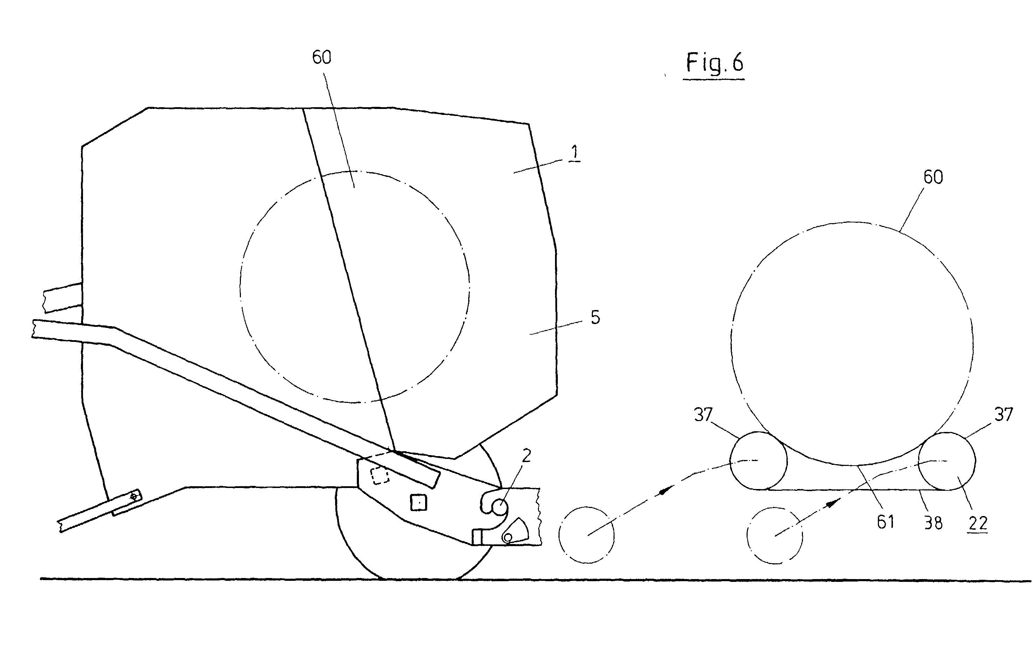

Figur 6 zeigt eine schematische Seitenansicht der Rundballenpresse 1 aus Figur 1 und der Transportvorrichtung mit Bewegungsablauf des Rundballens 60 beim Transport zur nicht dargestellten Verpackungsvorrichtung. Die Transportvorrichtung, d. h. der Wickeltisch 22 wird zusammen mit dem fertig gewickelten Rundballen 60 von der unteren Position in der Nähe der Öffnungsklappe 5 durch eine gleichzeitige vertikale und horizontale Verschiebung in die obere Position zur weiteren Bearbeitung verfahren, wobei sich diese Endposition unterhalb der nicht dargestellten Wickelarme befindet. Bereits während des Transportes kann mit der Wicklung eines weiteren Rundballens 60 begonnen werden.

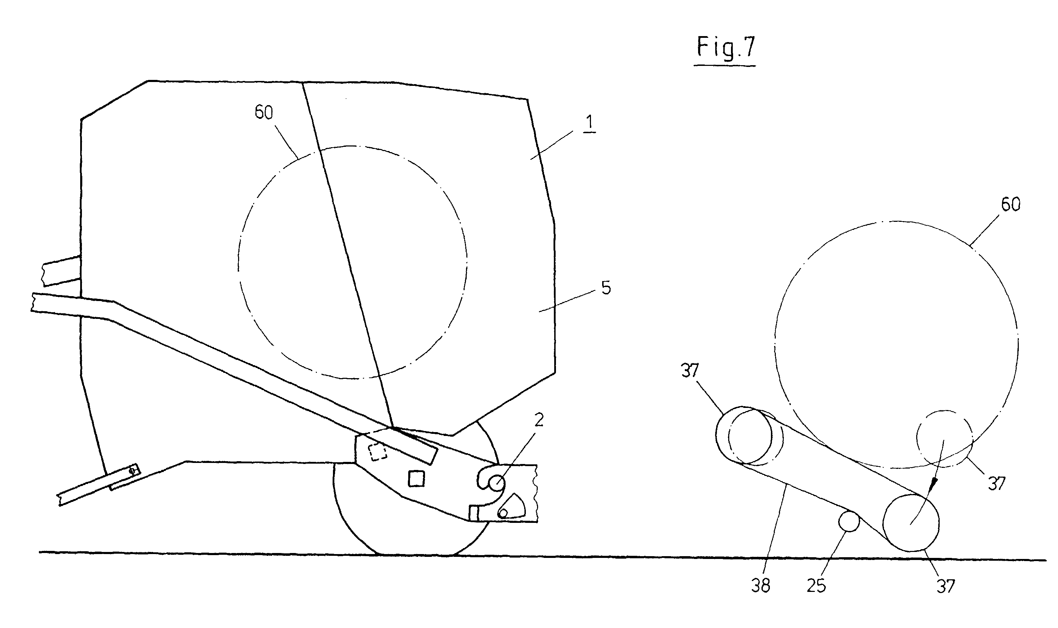

Figur 7 zeigt eine schematische Seitenansicht der Rundballenpresse 1 und der Transportvorrichtung mit Bewegungsablauf des Rundballens 60 beim Ablegen von der Transportvorrichtung. Der fertig umwickelte Rundballen 60 wird durch ein Absenken der hinteren Führungsschienen 30 des Wickeltisches 22, wie bereits ausgeführt, zum selbstständigen Abrollen veranlaßt, wobei die Wickeltischbänder 38 auf die Rolle 25 zwischen den beiden Wicklerseitenwänden 20 gedrückt und gleichzeitig im oberen Bereich gespannt werden, so daß der Rundballen 60 besser und leichter abrollen kann.

Figur 8 zeigt eine vereinfachte Seitenansicht der Transport in einer angehobenen Position zum Fahren auf der Straße oder im Feld. In dieser Darstellung ist nur die Wicklerseitenwand 20, die vorderen und hinteren Führungsschienen 29, 30, die Hubrollen 45 und Hubrollenachsen 46 sowie die Wickelrollen 37 und die Aufhängung der Verpackungsvorrichtung 3 gezeigt. Zwischen dem Anlenkpunkt des Stellzylinders 41 und den Wicklerseitenwänden 20 ist ein horizontal bewegliches Gelenk 56 angeordnet, welches einerseits ein Anheben der Verpackungsvorrichtung 3 ermöglicht und anderseits durch die außermittige nach oben versetzte Position und der senkrechten Anschlagfläche 58 eine nahezu starre Verbindung zwischen den Wicklerseitenwänden 20 und der Aufhängung 12 an der Ballenpresse 1 durch das Eigengewicht der Verpackungsvorrichtung 3 ermöglicht. Ggfs. kann durch einen Bolzen eine Verriegelung des Gelenkes 56 vorgenommen werden. Angehoben wird die Verpackungsvorrichtung 3 durch die seitlichen Stellzylinder 41 um einen Winkel von cirka 30 Grad, wenn der Wickeltisch 22 in den Führungsschienen 29, 30 durch beispielsweise einen Nutenstein blockiert ist. Der nicht dargestellte Nutenstein wird hierbei am hinteren Ende der Führungsschiene 30 zwischen den Rundrohren 44 mit einer an die Hubrolle angepaßten Wölbung vor den hinteren Hubrollen 45 eingeklemmt und durch einen Verriegelungsbolzen gehalten.

Figur 9 zeigt eine vereinfachte Seitenansicht der Verpackungsvorrichtung 3 mit der Aufnahmeposition und der Wickelposition des Wickeltisches 22 sowie in einer abgesenkten Position der hinteren Führungsschienen 30 zum Ablegen des Rundballens 60. In dieser Darstellung ist nur die Wicklerseitenwand 20, die vorderen und hinteren Führungsschienen 29, 30, die Hubrollen 45 und Hubrollenachsen 46 sowie die Wickelrollen 37 mit den Wickeltischbändern 38 gezeigt. Der von der Ballenpresse 1 aufgenommene Rundballen 60 wird von der Verpackungsvorrichtung 3 umwickelt und anschließend durch ein Absenken der hinteren Führungsschienen 30 des Wickeltisches 22, wie bereits ausgeführt, zum selbstständigen Abrollen veranlaßt, wobei die Wickeltischbänder 38 auf die Rolle 25 zwischen den beiden Wicklerseitenwänden gedrückt und gleichzeitig im oberen Bereich gespannt werden, so daß der Rundballen 60 leichter abrollen kann.

Figur 10 zeigt einen Teilschnitt gemäß der Verbindungslinie A - A und Figur 11 zeigt einen Teilschnitt gemäß der Verbindungslinie B - B durch die Führungsschienen 29, 30, und zwar einmal mit Hubrolle 45 und Hubrollenachse 46 sowie dem antreibbaren Zahnkranz 49 und einmal mit Drehgelenk 48 zwischen hinterer Führungschiene 30 und Wicklerseitenwand 20.

Figur 12 zeigt eine vereinfachte Seitenansicht der Verpackungsvorrichtung 3 gemäß Figur 3 oder 9 mit einer zusätzlichen Ballenbremse 62. Die Verpackungsvorrichtung 3 ist in verschiedenen Positionen der hinteren Führungsschienen 30 bzw. des Wickeltisches 22 mit Rundballen 60 gezeigt, wobei die Ballenbremse 62 in der Wickelposition in der Grundstellung und in der abgesenkten Position zusätzlich zum Boden hin verschwenkt abgebildet ist. Die Ballenbremse 62 besteht aus zwei seitlichen Tragarmen 66, die verschwenkbar an den hinteren Führungsschienen 30 über jeweils eine Konsole 67 befestigt und durch eine aus der Seitenansicht nicht erkennbare Querstange miteinander verbunden sind. Die Konsolen 67 können beispielsweise an den hinteren Führungsschienen 30 angeschweißt sein und weisen jeweils einen Anlenkpunkt 73 für die Tragarme 66 auf. Betätigt wird die Ballenbremse 62 im gezeigten Ausführungsbeispiel durch den Stellzylinder 47, welcher zur Absenkung der hinteren Führungsschienen 30 verwendet wird. Alternativ besteht die Möglichkeit einen zusätzlichen Stellzylinder zu verwenden. Damit die Ballenbremse 62 erst mit erfolgter Absenkung des Wickeltisches 22 gelöst wird, ist eine Umlenkmechanik erforderlich, die aus einem ersten Hebelarm 68, einer ersten Schubstange 64, einem Umlenkhebel 63 sowie einer zweiten Schubstange 65 besteht.

Die Bewegung der Ballenbremse 62 erfolgt mittelbar durch den Stellzylinder 47 der hinteren Führungsschienen 30, wobei der Stellzylinder 47 zum Absenken der hinteren Führungsschienen 30 einenends mittig an einem um eine Drehachse 70 verschwenkbaren Hebelarm 68 und anderenends an den hinteren Führungschienen 30 befestigt ist und wobei der Hebelarm 68 zum Anheben der hinteren Führungsschienen abstützend an einem Anschlag 69 anliegt und an dem freien Ende des Hebelarms eine Schubstange 64 befestigt ist, die mit einem um eine Drehachse 71 verschwenkbaren Winkelhebel 63 verbunden ist, an dessen zweiten Ende eine mit den Tragarmen 66 der Ballenbremse 62 verbundene Schubstange 65 befestigt ist. Wenn die hinteren Führungsschienen 30 eine Endposition erreicht haben, beispielsweise wenn der Fuß 72 auf dem Boden aufgesetzt hat, wird die Bewegung des auseinanderfahrenden Stellzylinders 47 durch den vom Anschlag weg bewegten Hebelarm 68 und die erste Schubstange 64 auf den Winkelhebel 63 übertragen und durch die dadurch bewegte zweite Schubstange 65 die Ballenbremse 62 gelöst. Beim Anheben der hinteren Führungsschienen 30 wird der Hebelarm 68 zunächst auf den Anschlag 69 zu bewegt und somit die Ballenbremse 62 in die Ausgangsstellung zurückgefahren. Nach erfolgter Anlage des Hebelarms 68 am Anschlag 69 erfolgt anschließend das Anheben der hinteren Führungsschienen 30 in die ursprüngliche Wickelposition des Wickeltisches 22.

### Bezugszeichenliste

- 1: Ballenpresse
- 2: Anbauvorrichtung
- 3: Verpackungsvorrichtung
- 4: Gehäuse
- 5: Klappenöffnung
- 6: Achse
- 7: Rad
- 8: Längsstrebe
- 9: Zugdeisel
- 10: Konsole
- 11: Zapfen
- 12: Aufhängung
- 13: Verriegelungsbolzen
- 14: Strebe
- 15: Stützrad
- 16: Rundballen
- 17: Verriegelungskeil
- 18: Anschlag
- 19: Konsole
- 20: Wicklerseitenwand
- 21: Rahmengestell
- 22: Wickeltisch
- 23: Tragarm
- 24: Wickelarm
- 25: Rolle
- 26: Schenkel
- 27: Abstellstütze
- 28: Ansatz
- 29: Führungsschiene
- 30: Führungsschiene
- 31: Abstellstütze
- 33: Fußteil
- 34: Kurbel
- 35: Wickeltischseitenwand
- 36: Achse
- 37: Wickelrolle
- 38: Wickeltischband
- 40: Zapfen
- 41: Stellzylinder
- 42: Zapfen
- 43: Konsole
- 44: Rundrohr
- 45: Hubrolle
- 46: Hubrollenachse
- 47: Stellzylinder
- 48: Drehgelenk
- 49: Zahnkranz
- 50: Stütze
- 51: Querstrebe
- 52: Konsole
- 53: Lager
- 54: Antriebsmotor
- 55: Folienrolle
- 56: Gelenk
- 57: Bolzen
- 58: Anschlagfläche
- 59: Kante
- 60: Rundballen
- 61: Mulde
- 62: Ballenbremse
- 63: Winkelhebel
- 64: Schubstange
- 65: Schubstange
- 66: Tragarm
- 67: Konsole
- 68: Hebelarm
- 69: Anschlag
- 70: Drehpunkt
- 71: Drehpunkt
- 72: Fuß
- 73: Anlenkpunkt

## Patentansprüche

1. Vorrichtung zum Pressen und Umwickeln von Rundballen aus Heu, Halbheu, Stroh oder ähnlichem Halmgut, bestehend aus einer Ballenpresse (1) und einer Verpackungsvorrichtung (3), welche beide über zumindest einem sich auf Laufrädern abstützenden Rahmengestell miteinander verbunden sind und einer in Längsrichtung bewegbaren Transportvorrichtung, welche einen fertig gewickelten Rundballen (60) von der Ballenauswurföffnung zur Verpackungsvorrichtung (3) transportiert,
**dadurch gekennzeichnet,**
**dass** die Transportvorrichtung den fertigen Rundballen (60) nach Auswurf aus der Ballenpresse (1) durch eine zumindest in einem Teilbereich gleichzeitige vertikale und horizontale Bewegung nach hinten anhebend zur Verpackungsvorrichtung (3) bewegt und wobei die Klappenöffnung (5) der Ballenpresse (1) unabhängig von der Position der Transportvorrichtung mit oder ohne Rundballen (6) zu öffnen oder zu schließen ist.

2. Vorrichtung nach Anspruch 1,
**dadurch gekennzeichnet,**
**daß** die Transportvorrichtung aus einem zumindest in einem Teilbereich gleichzeitig vertikal und horizontal beweglichen Wickeltisch (22) besteht.

3. Vorrichtung nach Anspruch 1 oder 2,
**dadurch gekennzeichnet,**
**daß** der Wickeltisch (22) aus einem Rahmenelement (35) besteht, in dem mindestens zwei antreibbare und quer zur Längsrichtung beabstandete Wickelrollen (37) drehbar gelagert sind, welche in Längsrichtung angeordnete Wickeltischbänder (38) aufweisen.

4. Vorrichtung nach Anspruch 3,
**dadurch gekennzeichnet,**
**daß** das Rahmenelement (35) vier Hubrollenachsen (46) aufweist, welche diametral und paarweise gegenüberliegend angeordnet und über eine Hubrolle (45) in jeweils einer schräg verlaufenden und nach hinten ansteigenden Führungsschiene (29,30) verschiebbar gelagert sind.

5. Vorrichtung nach Anspruch 3,
**dadurch gekennzeichnet,**
**daß** die Führungsschienen (29,30) jeweils diametral gegenüberliegend und parallel verlaufend mit dem Rahmengestell (21) verbunden sind, wobei zumindest die hinteren Führungsschienen (30) über ein Drehgelenk (48) schwenkbar an dem Rahmengestell (21) befestigt sind.

6. Vorrichtung nach einem oder mehreren der Ansprüche 1 bis 5
**dadurch gekennzeichnet,**
**daß** die Hubrollenachsen (46) des Wickeltisches (22) mit Hubrollen (45) und Gleitlagern in den Führungsschienen (29,30) über zumindest einen Stellzylinder (41) verfahrbar gelagert sind.

7. Vorrichtung nach einem oder mehreren der Ansprüche 1 bis 6,
**dadurch gekennzeichnet,**
**daß** die Führungsschienen (29,30) des Wickeltisches (22) schräg verlaufend und nach hinten ansteigend ausgebildet sind, wobei zumindest an einem Ende ein horizontal verlaufender Führungsansatz ausgebildet ist.

8. Vorrichtung nach einem oder mehreren der Ansprüche 1 bis 6,
**dadurch gekennzeichnet,**
**daß** die Führungsschienen (29,30) des Wickeltisches (22) im mittleren Bereich abgewinkelt oder gebogen ausgebildet sind.

9. Vorrichtung nach einem oder mehreren der Ansprüche 1 bis 6,
**dadurch gekennzeichnet,**
**daß** die Führungsschienen (29,30) des Wickeltisches (22) im vorderen, unteren Bereich zunächst flach ansteigend und anschließend stärker ansteigend ausgebildet sind.

10. Vorrichtung nach einem oder mehreren der Ansprüche 1 bis 9,
**dadurch gekennzeichnet,**
**daß** das Rahmengestell (21) mit den jeweils diametral gegenüberliegenden Führungsschienen (29,30) mittels eines weiteren oder der vorhandenen Stellzylinder (41) über ein Gelenk (62) anhebbar ausgebildet ist.

11. Vorrichtung nach Anspruch 5,
**dadurch gekennzeichnet,**
**daß** die hinteren diametral gegenüberliegenden Führungsschienen (30) über einen weiteren Stellzylinder (47) nach Beendigung des Wickelvorganges nach hinten absenkbar ausgebildet sind.

12. Vorrichtung nach einem oder mehreren der Ansprüche 1-11,
**dadurch gekennzeichnet,**
**daß** nach Beendigung des Wickelvorganges und dem Absenken der hinteren Führungsschienen (30) eine fest mit dem Rahmengestell (21) verbundene Rolle (25) gegen die Wickeltischbänder (38) von unten drückt und die Wickeltischbänder im oberen Bereich spannt.

13. Vorrichtung nach einem oder mehreren der Ansprüche 1-12,
**dadurch gekennzeichnet,**
**daß** das Rahmengestell (21) bzw. die hinteren Führungsschienen (30) eine Ballenbremse (62) aufweisen, welche schwenkbar und quer zur Längsrichtung mit dem Rahmengestell (21) bzw. den Führungsschienen (30) über eine Konsole (67) verbunden ist.

14. Vorrichtung nach einem oder mehreren der Ansprüche 1 bis 13,
**dadurch gekennzeichnet,**
**daß** die Ballenbremse (62) aus zwei seitlichen um einen Drehpunkt verschwenkbare Tragarme (66) besteht, welche über eine Querstange miteinander verbunden sind und den Rundballen (60) halten.

15. Vorrichtung nach Anspruch 14,
**dadurch gekennzeichnet,**
**daß** die Ballenbremse (62) unmittelbar durch einen weiteren Stellzylinder oder über einen Umlenkhebel (63) und mindestens eine Schubstange (64, 65) absenkbar ist.

16. Vorrichtung nach Anspruch 15,
**dadurch gekennzeichnet,**
**daß** der Stellzylinder (47) zum Absenken der hinteren Führungsschienen (30) einenends mittig an einem um eine Drehachse (70) verschwenkbaren Hebelarm (68) und anderenends an den hinteren Führungschienen (30) befestigt ist, wobei der Hebelarm (68) zum Anheben der hinteren Führungsschienen (30) abstützend an einem Anschlag (69) anliegt und an dem freien Ende des Hebelarms (68) eine Schubstange (64) befestigt ist, die mit einem um eine Drehachse (71) verschwenkbaren Winkelhebel (72) verbunden ist, an dessen zweiten Ende eine mit den Tragarmen (66) verbundene Schubstange (65) befestigt ist.

17. Vorrichtung nach einem oder mehreren der Ansprüche 1 bis 16,
**dadurch gekennzeichnet,**
**daß** das Rahmengestell (21) im hinteren Bereich einen beim Absenken der hinteren Führungsschienen (30) auf den Boden aufsetzenden Fuß (72) aufweist.

18. Vorrichtung nach einem oder mehreren der Ansprüche 1 bis 17,
**dadurch gekennzeichnet,**
**daß** der Wickeltisch (22) mit einer elektronischen Neigungsregelung ausgestattet ist, welche den Wickeltisch (22) während des Wickelvorganges unabhängig von der Arbeitslage der Verpackungsvorrichtung (3) in der Horizontalen hält.

19. Vorrichtung nach einem oder mehreren der Ansprüche 1 bis 18
**dadurch gekennzeichnet,**
**daß** die Verbindung zwischen Ballenpresse (1) und Verpackungsvorrichtung (3) starr durch ein Rahmengestell (21) oder durch zwei über mindestens ein Drehgelenk miteinander verbundene Rahmengestelle erfolgt, welches eine vertikale Schwenkbewegung vorsieht.

20. Vorrichtung nach einem oder mehreren der Ansprüche 1 bis 19,
**dadurch gekennzeichnet,**
**daß** das Rahmengestell (21) der Verpackungsvorrichtung (3) über eine verriegelbare starre Aufhängung (12) mit dem Rahmengestell der Ballenpresse (1) verbindbar ist.

21. Vorrichtung nach einem oder mehreren der Ansprüche 1 bis 20,
**dadurch gekennzeichnet, daß** die Achse (6) der Laufräder (7) gegenüber der Ballenpresse (1) entgegen der Hauptfahrtrichtung durch eine dem Schwerpunkt angepaßte Verlagerung nach hinten und/oder unten versetzt angeordnet ist oder zusätzliche anhängbare Laufräder für die Verpackungsvorrichtung (3) vorgesehen sind.

22. Vorrichtung nach einem oder mehreren der Ansprüche 1 bis 21,
**dadurch gekennzeichnet,**
**daß** die Verpackungsvorrichtung (3) ein Traggestell für einen Wickelarm (24) aufweist, welches aus zumindest zwei vertikalen Stützen (50) und mindestens zwei miteinander im Drehpunkt der Wickelarme (24) verbundene horizontale oder schräg verlaufende Stützen (51) besteht, wobei die vertikalen Stützen (51) seitlich neben der Ballenauswurfsöffnung der Ballenpresse (1) mit dem Rahmengestell (21) verbunden sind.

23. Vorrichtung nach einem oder mehreren der Ansprüchen 1 bis 22,
**dadurch gekennzeichnet,**
**daß** das Traggestell V- oder U-förmig zur Ballenpresse (1) hin geöffnet ist und die seitlichen Stützen (50) derart beabstandet sind, daß die Klappenöffnung der Ballenpresse (1) zwischen den seitlichen Stützen (50) frei beweglich ist.

24. Vorrichtung nach einem oder mehreren der Ansprüche 1 bis 23,
**dadurch gekennzeichnet,**
**daß** die Verpackungsvorrichtung (3) oder das Rahmengestell (21) mit zumindest einem drehbar gelagerten und mitlaufenden Rad ausgestattet ist.

## Claims

1. Apparatus for pressing and wrapping round bales of hay, haylage, straw or similar stalk material, comprising a bale press (1) and a packaging apparatus (3) which are both connected together by way of at least one frame structure supported on wheels, and a transport apparatus which is movable in the longitudinal direction and which transports a finished wound round bale (60) from the bale discharge opening to the packaging apparatus (3),
**characterised in that**
the transport apparatus moves the finished round bale (60) after discharge from the bale press (1) rising rearwardly to the packaging apparatus (3) by a vertical and horizontal movement which is simultaneously at least in a partial region, and wherein the flap opening (5) of the bale press (1) is to be opened or closed independently of the position of the transport apparatus with or without a round bale (6).

2. Apparatus according to claim 1 **characterised in that** the transport apparatus comprises at least one winding table (22) which is movable vertically and horizontally simultaneously at least in a partial region.

3. Apparatus according to claim 1 or claim 2 **characterised in that** the winding table (22) comprises a frame element (35) in which there are rotatably mounted at least two drivable winding rollers (37) which are spaced transversely with respect to the longitudinal direction and which have winding table belts (38) arranged in the longitudinal direction.

4. Apparatus according to claim 3 **characterised in that** the frame element (35) has four stroke roller shafts (46) which are arranged in diametrally and paired opposite relationship and are supported displaceably by way of a stroke roller (45) in a respective inclinedly extending and rearwardly rising guide rail (29, 30).

5. Apparatus according to claim 3 **characterised in that** the guide rails (29, 30) are respectively connected to the frame structure (21) in diametrally opposite and parallel relationship, wherein at least the rear guide rails (30) are fixed pivotably to the frame structure (21) by way of a rotary pivot (48).

6. Apparatus according to one or more of claims 1 to 5 **characterised in that** the stroke roller shafts (46) of the winding table (22) are supported with stroke rollers (45) and sliding bearings in the guide rails (29, 30) displaceably by way of at least one adjusting cylinder (41).

7. Apparatus according to one or more of claims 1 to 6 **characterised in that** the guide rails (29, 30) of the winding table (22) are arranged to extend inclinedly and rising rearwardly, wherein a horizontally extending guide projection is provided at least at one end.

8. Apparatus according to one or more of claims 1 to 6 **characterised in that** the guide rails (29, 30) of the winding table (22) are of an angled or bent configuration in the central region.

9. Apparatus according to one or more of claims 1 to 6 **characterised in that** the guide rails (29, 30) of the winding table (22) are of an initially shallowly rising configuration in the front lower region and are then of a more steeply rising configuration.

10. Apparatus according to one or more of claims 1 to 9 **characterised in that** the frame structure (21) with the respectively diametrally opposite guide rails (29, 30) is adapted to be lifted by way of a pivot (62) by means of a further adjusting cylinder or one of the existing adjusting cylinders (41).

11. Apparatus according to claim 5 **characterised in that** the rear diametrally opposite guide rails (30) are adapted to be lowered rearwardly by way of a further adjusting cylinder (47) after termination of the winding operation.

12. Apparatus according to one or more of claims 1 to 11 **characterised in that** after termination of the winding operation and after the lowering movement of the rear guide rails (30) a roller (25) fixedly connected to the frame structure (21) is pressed from below against the winding table belts (38) and tensions the winding table belts in the upper region.

13. Apparatus according to one or more of claims 1 to 12 **characterised in that** the frame structure (21) or the rear guide rails (30) have a bale brake (62) which is connected pivotably and transversely with respect to the longitudinal direction to the frame structure (21) or the guide rails (30) by way of a bracket (67).

14. Apparatus according to one or more of claims 1 to 13 **characterised in that** the bale brake (62) comprises two lateral carrier arms (66) which are pivotable about a pivot point and which are connected together by way of a transverse bar and which hold the round bale (60).

15. Apparatus according to claim 14 **characterised in that** the bale brake (62) can be lowered directly by way of a further adjusting cylinder or by way of a direction-changing lever (62) and at least one thrust bar (64, 65).

16. Apparatus according to claim 15 **characterised in that** the adjusting cylinder (47) for lowering the rear guide rails (30) is fixed at one end centrally to a lever arm (68) pivotable about a rotary axis (70) and at the other end to the rear guide rails (30), wherein the lever arm (68) for lifting the rear guide rails (30) bears in supporting relationship against an abutment (69) and fixed to the free end of the lever arm (68) is a thrust bar (64) connected to a bell crank (72) which is pivotable about a rotary axis (71) and to the second end of which is fixed a thrust bar (65) connected to the carrier arms (66).

17. Apparatus according to one or more of claims 1 to 16 **characterised in that** the frame structure (21) in the rear region has a foot (72) which can be set down on the ground when the rear guide rails (30) are lowered.

18. Apparatus according to one or more of claims 1 to 17 **characterised in that** the winding table (22) is provided with an electronic inclination regulation means which holds the winding table (22) in the horizontal condition during the winding operation independently of the working position of the packaging apparatus (3).

19. Apparatus according to one or more of claims 1 to 18 **characterised in that** the connection between the bale press (1) and the packaging apparatus (3) is effected rigidly by a frame structure (21) or by two frame structures connected together by way of at least one rotary pivot which provides a vertical pivotal movement.

20. Apparatus according to one or more of claims 1 to 19 **characterised in that** the frame structure (21) of the packaging apparatus (3) can be connected to the frame structure of the bale press (1) by way of a lockable rigid suspension (12).

21. Apparatus according to one or more of claims 1 to 20 **characterised in that** the axle (6) of the wheels (7) is arranged displaced rearwardly and/or downwardly with respect to the bale press (1) in opposite relationship to the main direction of travel by virtue of a shift which is adapted to the centre of gravity or there are provided additional wheels which can be attached for the packaging apparatus (3).

22. Apparatus according to one or more of claims 1 to 21 **characterised in that** the packaging apparatus (3) has a support structure for a winding arm (24), which support structure comprises at least two vertical supports (50) and at least two horizontal or inclinedly extending supports (51) connected together at the pivot point of the winding arms (24), wherein the vertical supports (51) are connected to the frame structure (21) laterally beside the bale discharge opening of the bale press (1).

23. Apparatus according to one or more of claims 1 to 22 **characterised in that** the support structure is opened in a V- or U-shape towards the bale press (1) and the lateral supports (50) are spaced in such a way that the flap opening of the bale press (1) is freely movable between the lateral supports (50).

24. Apparatus according to one or more of claims 1 to 23 **characterised in that** the packaging apparatus (3) or the frame structure (21) is provided with at least one rotatably mounted wheel which travels therewith.

## Revendications

1. Dispositif pour compresser et emballer des balles rondes de foin, de semi foin, de paille ou de produits à tiges similaires, comprenant une presse à balles (1) et un dispositif d'emballage (3), qui sont liés l'un à l'autre par l'intermédiaire d'au moins un châssis-support reposant sur des roues, ainsi qu'un dispositif de transport, mobile dans la direction longitudinale, qui assure le transport d'une balle ronde (60) terminée d'enroulement d'une ouverture d'éjection de balle jusqu'au dispositif d'emballage (3), **caractérisé en ce que** le dispositif de transport, consécutivement à l'éjection de la balle ronde (60) terminée hors de la presse à balles, par un mouvement simultané dans les directions verticale et horizontale au moins sur une partie, déplace ladite balle ronde vers l'arrière, en l'élevant, jusqu'au dispositif d'emballage (3), la trappe (5) de la presse à balles (1) pouvant être ouverte ou fermée indépendamment de la position du dispositif de transport avec ou sans balle ronde (6).

2. Dispositif selon la revendication 1, **caractérisé en ce que** le dispositif de transport comprend une table d'emballage (22), qui au moins sur une partie, peut être déplacée simultanément dans les directions verticale et horizontale.

3. Dispositif selon la revendication 2, **caractérisé en ce que** la table d'emballage (22) comprend un élément de châssis (35) dans lequel au moins deux rouleaux d'emballage (37) entraînés, sont montés tournants à distance l'un de l'autre, transversalement à la direction longitudinale et portent des bandes de table d'emballage (38). disposées dans la direction longitudinale.

4. Dispositif selon la revendication 3, **caractérisé en ce que** l'élément de châssis (35) présente quatre axes (46) de galet de levage, qui sont disposés v-is-à-vis deux à deux dans des positions diamétralement opposées et peuvent être déplacés au moyen d'un galet de levage (45), chacun dans un rail de guidage (29, 30) incliné qui s'élève en direction de l'arrière.

5. Dispositif selon la revendication 4, **caractérisé en ce que** les rails de guidage (29, 30) disposés en vis-à-vis et parallèlement l'un à l'autre sont liés au châssis-support (21), au moins les rails de guidage (30) arrière étant fixés au châssis-support (21), avec possibilité de pivotement, par l'intermédiaire d'un joint tournant (48).

6. Dispositif selon une ou plusieurs des revendications 1 à 5, **caractérisé en ce que** les axes de galet de levage (46) de la table d'emballage (22) avec des galets de levage (45) et des paliers lisses peuvent être déplacés dans les rails de guidage (29, 30) à l'aide d'au moins un vérin de commande (41).

7. Dispositif selon une ou plusieurs des revendications 1 à 6, **caractérisé en ce que** les rails de guidage (29, 30) de la table d'emballage (22) sont inclinés et s'élèvent en direction de l'arrière, un embout de guidage horizontal étant aménagé à au moins une extrémité.

8. Dispositif selon une ou plusieurs des revendications 1 à 6, **caractérisé en ce que** les rails de guidage (29, 30) de la table d'emballage (22), dans la partie médiane forment un angle ou une courbe.

9. Dispositif selon une ou plusieurs des revendications 1 à 6, **caractérisé en ce que** les rails de guidage (29, 30) de la table d'emballage (22), dans la partie avant, inférieure, s'élèvent d'abord lentement, puis plus fortement.

10. Dispositif selon une ou plusieurs des revendications 1 à 9, **caractérisé en ce que** le châssis-support (21) avec les rails de guidage (29, 30) disposés en vis-à-vis peut être soulevé à l'aide d'un vérin de commande supplémentaire ou des vérins de commande (41) existants par l'intermédiaire d'une articulation (62).

11. Dispositif selon la revendication 6, **caractérisé en ce que** les rails de guidage (30) arrière, disposés en vis-à-vis, peuvent être abaissés vers l'arrière à l'aide d'un vérin de commande (47) supplémentaire à la fin du processus d'emballage.

12. Dispositif selon une ou plusieurs des revendications 1 à 11, **caractérisé en ce qu'**à la fin du processus d'emballage et après abaissement des rails de guidage arrière (30), un galet (25) lié de manière fixe au châssis-support (21) exerce une pression par le dessous sur les bandes (28) de la table d'emballage et les tend dans la partie supérieure.

13. Dispositif selon une ou plusieurs des revendications 1 à 12, **caractérisé en ce que** le châssis-support (21) ou les rails de guidage arrière (30) comportent un frein de balle (62), qui est lié de manière pivotante et transversalement à la direction longitudinale au châssis-support (21) ou aux rails de guidage (30) par l'intermédiaire d'une console (67).

14. Dispositif selon une ou plusieurs des revendications 1 à 13, **caractérisé en ce que** le frein de balle (62) est formé de deux bras supports (66) latéraux montés pivotants autour d'un point d'articulation, qui sont reliés entre eux par une barre transversale et retiennent la balle ronde (60).

15. Dispositif selon la revendication 14, **caractérisé en ce que** le frein de balle (62) peut être abaissé directement par un vérin de commande supplémentaire ou par l'intermédiaire d'un levier de renvoi (63) et d'au moins une bielle (64, 65).

16. Dispositif selon la revendication 15, **caractérisé en ce que** le vérin de commande (47), pour l'abaissement des rails de guidage arrière (30), à une extrémité est fixé au milieu d'un bras de levier (68) qui pivote autour d'un axe d'articulation (70), et à son autre extrémité est fixé aux rails de guidage arrière (30), ledit bras de levier (68), pour soulever les rails de guidage arrière (30), venant en appui contre une butée (69), tandis qu'à l'extrémité libre du bras de levier (68) est fixée une bielle (64) reliée à un levier coudé (72) qui pivote autour d'un axe (71) et à la deuxième extrémité duquel est fixée une bielle (65) liée au bras-supports (66).

17. Dispositif selon une ou plusieurs des revendications 1 à 16, **caractérisé en ce que** le châssis-support (21) dans la région arrière comporte un pied (72) qui repose sur le sol lorsqu'on abaisse les rails de guidage arrière (30).

18. Dispositif selon une ou plusieurs des revendications 1 à 17, **caractérisé en ce que** la table d'emballage (22) est équipée d'une régulation électronique d'inclinaison, qui maintient la table d'emballage (22) horizontale pendant le processus d'emballage, indépendamment de la position de travail du dispositif d'emballage (3).

19. Dispositif selon une ou plusieurs des revendications 1 à 18, **caractérisé en ce que** la liaison entre la presse à balles (1) et le dispositif d'emballage (3) est rigide et est réalisée au moyen d'un châssis-support (21) ou de deux châssis liés l'un à l'autre par un joint articulé, qui permet une oscillation dans la direction verticale.

20. Dispositif selon une ou plusieurs des revendications 1 à 19, **caractérisé en ce que** le châssis-support (21) du dispositif d'emballage (3) peut être relié au châssis-support de la presse à balles (1) par une attache (12) verrouillable.

21. Dispositif selon une ou plusieurs des revendications 1 à 20, **caractérisé en ce que** l'axe (6) des roues porteuses (7), par rapport à la presse à balles (1), est déporté vers l'arrière et/ou vers le bas, avec un décalage adapté en fonction du centre de gravité, dans la direction opposée à la direction de déplacement ou **en ce que** des roues porteuses adaptables supplémentaires sont prévues pour les dispositifs d'emballage (3).

22. Dispositif selon une ou plusieurs des revendications 1 à 21, **caractérisé en ce que** le dispositif d'emballage (3) comporte un cadre support pour un bras d'emballage (24), qui comprend au moins deux supports verticaux (50) et au moins deux supports horizontaux ou inclinés (51), liés l'un à l'autre au niveau du point de rotation des bras d'emballage (24), les supports verticaux (50), sur le côté et dans le voisinage de l'ouverture d'éjection des balles de la presse à balles (1), étant liés au châssis-support (21).

23. Dispositif selon une ou plusieurs des revendications 1 à 22, **caractérisé en ce que** le cadre-support est ouvert en V ou en U en direction. de la presse à balles (1) et **en ce que** les supports latéraux (50) sont mutuellement espacés, de telle sorte que la porte de l'ouverture d'éjection de la presse à balles (1) puisse se déplacer librement entre lesdits supports latéraux (50).

24. Dispositif selon une ou plusieurs des revendications 1 à 23, **caractérisé en ce que** le dispositif d'emballage (3) ou le châssis-support (21) est équipé d'au moins une roue montée tournante.
